Europäisches Patentamt

European Patent Office

Office européen des brevets

(19)

(11) Numéro de publication : **0 210 938**
**B1**

(12)

# FASCICULE DE BREVET EUROPÉEN

(45) Date de publication du fascicule du brevet :
26.04.89

(21) Numéro de dépôt : 86440063.5

(22) Date de dépôt : 22.07.86

(51) Int. Cl.⁴ : **B 26 D  1/60**, B 23 D 25/04

(54) **Dispositif pour le déplacement rectiligne du chariot de coupe d'une spiraleuse ou d'une formeuse linéaire.**

(30) Priorité : 22.07.85 FR 8511285

(43) Date de publication de la demande :
04.02.87 Bulletin 87/06

(45) Mention de la délivrance du brevet :
26.04.89 Bulletin 89/17

(84) Etats contractants désignés :
AT BE CH DE GB IT LI LU NL SE

(56) Documents cités :
DE—B— 1 298 699
FR—A— 1 276 537
FR—A— 1 484 609
FR—A— 1 535 342
FR—A— 2 370 582

(73) Titulaire : Sireix, Georges
9, rue St.Marc
F-68400 Riedisheim (FR)

(72) Inventeur : Sireix, Georges
9, rue St.Marc
F-68400 Riedisheim (FR)

(74) Mandataire : Aubertin, François
Cabinet Lepage & Aubertin Innovations et Prestations 4, rue de Haguenau
F-67000 Strasbourg (FR)

EP 0 210 938 B1

## Description

L'invention concerne un dispositif pour le déplacement rectiligne du chariot de coupe d'une spiraleuse ou d'une formeuse linéaire formant en continu des éléments tubulaires destinés à la confection de tubes et d'emballages, ce chariot étant pourvu à ses extrémités avant et arrière de paires de coulisseaux glissant le long de deux rails de guidage parallèles à l'axe longitudinal de la spiraleuse ou de la formeuse linéaire et dont l'avance, synchronisée avec celle des éléments tubulaires, est assurée par un écrou se déplaçant sur une vis à bille entraînée en rotation par des moyens quelconques.

On connaît déjà, par le document FR-A-2.370.582, une spiraleuse permettant de confectionner des emballages réalisés à partir d'éléments tubulaires obtenus en continu par l'encollage de plusieurs bandes en matériaux fibreux, cellulosiques, métalliques, plastiques et d'une manière générale tout matériau en bande. Cette spiraleuse comporte, entre autres, un ensemble de coupes multiples monté sur un chariot soumis à un déplacement dans le sens de l'avance des éléments tubulaires en cours de formage. En fonction du diamètre et/ou de l'épaisseur de ces éléments tubulaires, la vitesse d'avance est variable mais pour que la coupe des éléments tubulaires se fasse dans des conditions normales, il faut que la vitesse d'avance du chariot soit synchronisée avec celle des éléments tubulaires. Ce chariot, pourvu à ses extrémités avant et arrière de paires de coulisseaux, glisse le long de deux rails de guidage parallèles à l'axe longitudinal de la machine et maintenus par des paliers fixés sur la table du bâti. Ce chariot comporte un écrou se déplaçant sur une vis à bille entraînée en rotation par des moyens quelconques.

Selon un autre mode de réalisation, l'entraînement de la vis à bille est assuré par un élément moteur auxiliaire accouplé directement à l'extrémité de la vis à bille et dont la vitesse de rotation est synchronisée avec la vitesse d'avance des éléments tubulaires.

Selon un autre mode de réalisation, l'entraînement de la vis à bille est réalisé par l'intermédiaire d'un arbre secondaire relié, d'une part, par un moyen d'entraînement tel que poulies, poulies variatrices, engrenages, pignons et chaînes ou autres et, d'autre part, par un second moyen d'entraînement à un élément moteur principal constituant l'élément de commande des moyens de formage de la machine. Ainsi, on obtient un synchronisme parfait entre la vitesse d'avance de l'élément tubulaire et la vitesse d'avance du chariot de l'ensemble de coupe.

Pour le recul dudit chariot, on préconise l'utilisation d'un ou de deux vérins auxiliaires reliés à l'écrou de la vis à bille par une biellette.

Peu importe les moyens d'entraînement utilisés pour provoquer la rotation de la vis à bille, la présente invention concerne le déplacement du chariot à partir de la vis à bille, la source de rotation de cette dernière étant toujours synchronisée avec l'élément moteur principal.

Cependant, si on accouple directement ou indirectement, un élément moteur important à la vis à bille, le démarrage de la rotation de cette dernière est très brutal et si ledit démarrage n'est pas brutal, il s'écoule un temps trop long pour la mise en vitesse d'avance du chariot, pour exécuter la coupe de l'élément tubulaire réalisé en continu et le retour dudit chariot. Le cas échéant, un démarrage brutal du chariot est acceptable lorsque la vitesse d'avance de l'élément tubulaire est inférieure à trente-cinq mètres par minute mais, par contre, est inacceptable pour des vitesses d'avance supérieures aux trente-cinq mètres par minute.

Par ailleurs, il est nécessaire que la courbe d'accélération de la vitesse d'avance du chariot soit homogène pour éviter les problèmes de rebondissement. Electriquement ou électroniquement, ce résultat peut être obtenu, mais ces moyens, fort onéreux, ne sont ni performants, ni fiables. Ainsi, on est amené soit de privilégier la précision de coupe, nécessaire notamment lorsque les éléments tubulaires comportent des étiquettes, au détriment de la vitesse d'avance donc du rendement de la machine, soit de privilégier la vitesse d'avance au détriment de la précision de coupe en risquant de sectionner les étiquettes, mais il est impossible de réaliser simultanément les deux caractéristiques.

La présente invention a pour but de remédier à ces inconvénients. L'invention, telle qu'elle est caractérisée dans la revendication 1, résout le problème consistant à créer un dispositif, pour le déplacement rectiligne du chariot de coupe d'une spiraleuse ou d'une formeuse linéaire formant en continu des éléments tubulaires destinés à la confection d'emballages, ce chariot étant pourvu, à ses extrémités avant et arrière, de paires de coulisseaux glissant le long de deux rails de guidage parallèles à l'axe longitudinal de la spiraleuse ou de la formeuse linéaire, et dont l'avance, synchronisée avec celle des éléments tubulaires, est assurée par un écrou se déplaçant sur une vis à bille entraînée en rotation par des moyens quelconques caractérisé en ce qu'il comporte, pour conférer au chariot de coupe un démarrage sinusoïdal suivi d'un déplacement à vitesse constante synchronisée avec la vitesse d'avance des éléments tubulaires, au moins un ensemble mécanique intercalé entre le chariot de coupe et l'écrou de la vis à bille et comprenant deux galets dont l'un est monté sur un axe solidaire de l'écrou et l'autre est enfilé sur un axe situé à l'une des extrémités d'une biellette pivotant autour d'un axe d'articulation situé à l'autre extrémité de la biellette et solidaire de l'écrou, ledit axe étant relié par une rotule à l'extrémité d'une bielle dont l'autre extrémité est reliée par un axe d'articulation au chariot de coupe.

Les avantages obtenus grâce à cette invention consistent essentiellement en ce qu'on confère au chariot une vitesse d'avance synchronisée sans-à-coups et le plus rapidement possible pour exploiter au maximum la longueur de la course du chariot soit pour exécuter la coupe des éléments tubulaires avec une grande précision, soit pour effectuer un repérage, soit pour faire des opérations quelconques au cours du déplacement du produit disposé sur le chariot. De ce fait, la cadence de la spiraleuse ou de la formeuse linéaire peut être augmentée considérablement et peut atteindre, voire même dépasser, une vitesse d'au moins cent mètres à la minute tout en permettant d'obtenir des coupes avec une haute précision. Par ailleurs, du fait qu'il s'agit d'un ensemble mécanique, le dispositif est moins onéreux et plus fiable que les moyens électriques et/ou électroniques utilisés.

L'invention est exposée ci-après plus en détail à l'aide de dessins représentant seulement un mode d'exécution.

La figure 1 représente, en vue en élévation, le chariot de coupe et les moyens d'entraînement d'une spiraleuse ou d'une formeuse linéaire.

La figure 2 représente, en vue en élévation, le dispositif conforme à l'invention assurant le déplacement rectiligne du chariot de coupe.

La figure 3 représente une demi-vue en plan de ce dispositif.

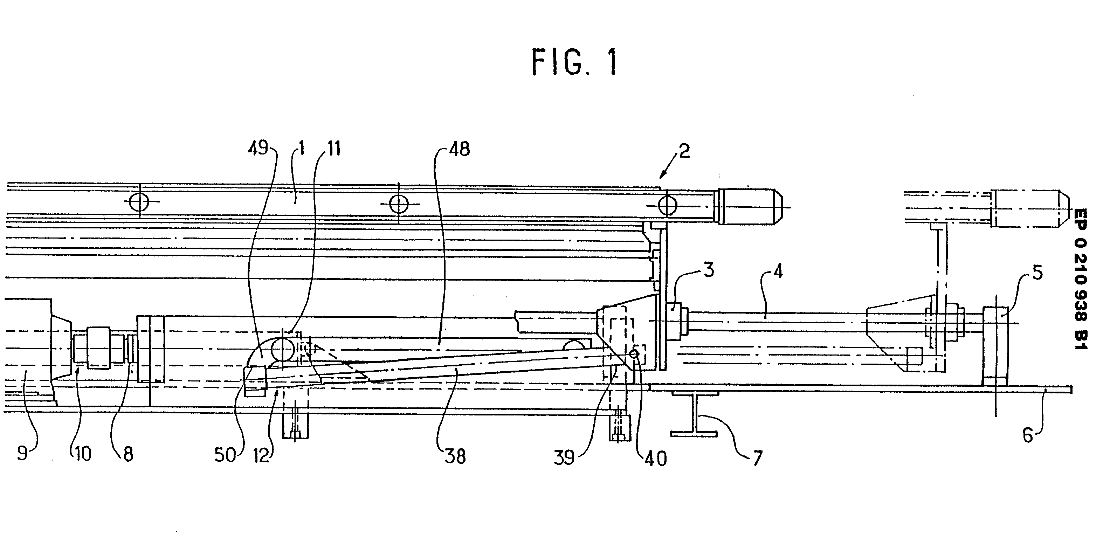

On se réfère à la figure 1.

La présente invention s'applique au déplacement d'un chariot de coupe 1 d'une spiraleuse ou d'une formeuse linéaire (non représentée). Du fait que les éléments tubulaires sont réalisés en continu, il est nécessaire de conférer au chariot de coupe 1 un déplacement rectiligne durant lequel l'élément tubulaire est sectionné en un ou plusieurs tronçons. Le chariot de coupe 1 comporte à ses extrémités avant et arrière 2 une paire de coulisseaux 3. Ces derniers glissent le long de deux rails de guidage 4 parallèles à l'axe longitudinal de la spiraleuse. Ces rails de guidage 4 sont maintenus par des paliers 5 fixés sur la table 6 du bâti 7. L'avance du chariot de coupe 1 est assurée par une vis à bille 8 entraînée en rotation par un élément moteur 9, ce dernier pouvant être soit un moteur auxiliaire accouplé directement à l'une des extrémités 10 de la vis à bille 8, soit le moteur principal de la spiraleuse ou de la formeuse linéaire relié à la vis à bille 8 par un arbre secondaire. Sur cette vis à bille 8 se déplace un écrou 11. Entre cet écrou 11 et le chariot de coupe 1 sont intercalés des ensembles mécaniques 12. Ces ensembles mécaniques 12 sont disposés symétriquement par rapport à l'axe longitudinal de la spiraleuse ou de la formeuse linéaire et l'écrou 11 est placé entre les deux ensembles mécaniques 12. Conformément à l'invention, ces ensembles mécaniques 12 confèrent au chariot de coupe 1 un démarrage sinusoïdal suivi d'un déplacement à vitesse constante synchronisée avec la vitesse d'avance de l'élément tubulaire.

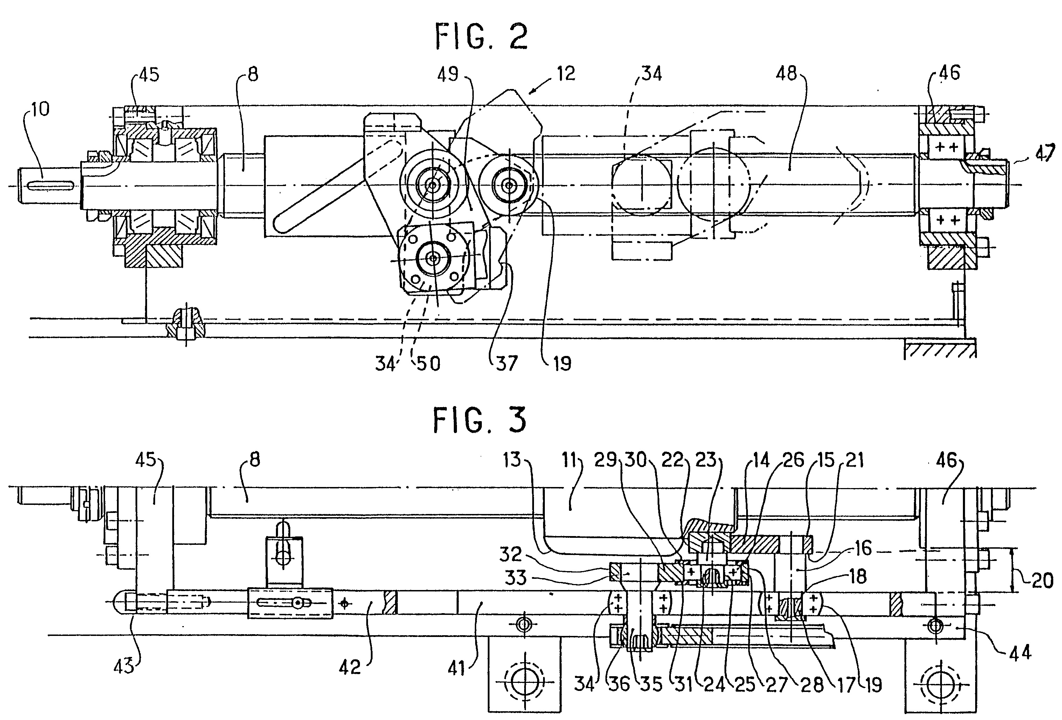

On se réfère aux figures 2 et 3 représentant les ensembles mécaniques 12. Cependant, la description suivante est limitée à un ensemble mécanique 12, étant entendu que les deux ensembles sont identiques.

L'écrou 11 comporte de chaque côté 13 un support 14 rendu solidaire dudit écrou 11 par un moyen quelconque. L'une des extrémités 15 du support 14 comporte un axe 16 dont l'extrémité libre 17 comporte une portée 18 sur laquelle est enfilé un galet de roulement 19. Celui-ci se trouve à une certaine distance 20 de la face externe 21 du support 14. L'autre extrémité 22 du support 14 comporte un axe d'articulation 23 dont l'extrémité libre 24 présente une portée 25 sur laquelle est disposé un roulement à billes 26. Celui-ci est engagé dans un alésage 27 réalisé dans l'extrémité 28 d'une biellette 29 et est maintenu par des flasques 30, 31.

L'autre extrémité 32 de la biellette 29 comporte un axe 33 parallèle à l'axe 16. Sur cet axe 33 est enfilé un galet de roulement 34 situé dans le prolongement du galet de roulement 19. L'extrémité libre 35 de l'axe 33 est reliée par une rotule 36 à l'extrémité 37 d'une bielle 38 dont l'autre extrémité 39 est reliée par un axe d'articulation 40 au chariot de coupe 1 (voir également figure 1). L'axe d'articulation 23 est parallèle à l'axe 33. Le galet de roulement 34 peut décrire un cercle dont le centre est l'axe d'articulation 23.

Les galets de roulement 19 et 34 se déplacent dans un chemin de guidage 41 réalisé dans un flanc 42 dont les extrémités 43, 44 sont maintenues par les paliers 45, 46 disposés aux extrémités 10 et 47 de la vis à bille 8.

Le chemin de guidage 41 se compose d'un tronçon horizontal 48 et d'un tronçon curviligne 49 ayant la forme approximative d'un quart de cercle, ce tronçon curviligne 49 aboutant au tronçon horizontal 48 du côté de l'extrémité entraînée 10 de la vis à bille 8. Le tronçon curviligne 49 est dirigé vers le bas 50.

Avant le départ du chariot de coupe 1, le galet de roulement 34 est situé dans le tronçon curviligne 49. L'axe longitudinal de la biellette 29 forme un certain angle avec la verticale, cet angle pouvant être de l'ordre de vingt cinq degrés. Ainsi, on peut éviter une perte de temps et obtenir un démarrage quasi immédiat. Le déplacement du chariot de coupe 1 est pratiquement nul quand le galet 34 se déplace dans le tronçon curviligne 49 du chemin de guidage 41 mais s'accélère très vite au fur et à mesure de l'engagement du galet 34 dans le tronçon horizontal 48 par suite du déplacement de l'écrou 11 sur la vis à bille 8. Cette dernière peut avoir un démarrage brutal sans inconvénient du fait qu'elle tourne à vide, donc elle n'est pas soumise à un effort. Au fur et à mesure que le galet 34 remonte le long du tronçon curviligne 49, la bielle 38 remonte en provoquant une poussée exercée sur le chariot de coupe 1 en lui conférant la vitesse d'avance recherchée.

Le recul du chariot de coupe 1 peut se faire en inversant le sens de rotation de la vis à bille 8 ou peut se faire par l'action d'un vérin (non représenté).

**Revendications**

1. Dispositif pour le déplacement rectiligne du chariot de coupe (1) d'une spiraleuse ou d'une formeuse linéaire formant en continu des éléments tubulaires destinés à la confection de tubes et d'emballages, ce chariot (1) étant pourvu à ses extrémités avant et arrière (2) de paires de coulisseaux (3) glissant le long de deux rails de guidage (4) parallèles à l'axe longitudinal de la spiraleuse ou de la formeuse linéaire et dont l'avance, synchronisée avec celle des éléments tubulaires, est assurée par un écrou (11) se déplaçant sur une vis à bille (8) entraînée en rotation par des moyens quelconques (9) caractérisé en ce qu'il comporte, pour conférer au chariot de coupe (1) un démarrage sinusoïdal, suivi d'un déplacement à vitesse constante synchronisée avec la vitesse d'avance des éléments tubulaires, au moins un ensemble mécanique (12) intercalé entre le chariot de coupe (1) et l'écrou (11) de la vis à bille (8) et comprenant deux galets (19) et (34) dont l'un (19) est monté sur un axe (16) solidaire de l'écrou (11) et l'autre (34) est enfilé sur un axe (33) situé à l'une des extrémités (32) d'une biellette (29) pivotant autour d'un axe d'articulation (23) situe à l'autre extrémité (28) de la biellette (29) et solidaire de l'écrou (11) ledit axe (33) étant relié par une rotule (36) à l'extrémité (37) d'une bielle (38) dont l'autre extrémité (39) est reliée par un axe d'articulation (40) au chariot de coupe (1).

2. Dispositif selon la revendication 1, caractérisé en ce que la vis à bille (8) comporte un début de rotation à vide permettant le démarrage brutal de la vis à bille (8).

3. Dispositif selon la revendication 1, caractérise en ce que l'ensemble mécanique (12) comporte un flanc (42) pourvu d'un chemin de guidage (41) dans lequel se déplacent les galets (19) et (34), et dont les extrémités (43, 44) sont maintenues par des paliers (45, 46) disposés aux extrémités (10) et (47) de la vis à bille (8).

4. Dispositif selon la revendication 3, caractérisé en ce que le chemin de guidage (41) comporte un tronçon horizontal (48) et un tronçon curviligne (49) ayant la forme approximative d'un quart de cercle.

5. Dispositif selon la revendication 4, caractérisé en ce que le tronçon curviligne (49) est situé au côté de l'extrémité entraînée (10) de la vis à bille (8).

6. Dispositif selon la revendication 4, caractérisé en ce que le tronçon curviligne (49) est dirigé vers le bas.

7. Dispositif selon la revendication 1, caractérisé en ce que la biellette (29) comporte au départ du chariot de coupe (1) un axe longitudinal formant un angle de l'ordre de vingt cinq degrés avec la verticale.

**Claims**

1. Apparatus for the rectilinear displacement of the cutting carriage (1) of a linear winder or former for making tubular elements for making up tubes and packs, this carriatge (1) being provided at its front and rear extremities (2) with pairs of slides (3) siding along two guide rails (4) parallel with the longitudinal axis of the linear winder or former, the advance of which, synchronized with that of the tubular elements, is ensured by a nut (11) moving on a ball thread (8) which is caused to rotate by appropriate means (9), characterized by the fact that it comprises, in order to start off this cutting carriage (1) sinusoidally, followed by a displacement at constant speed synchronized with the speed of advance of the tubular elements, at least one mechanical assembly (12) inserted between the cutting carriage (1) and the nut (11) of the ball thread (8) and comprising two rollers (19) and (34) one of which (19) is mounted on a spindle (16) in one piece with the nut (11) and the other (34) is threaded on a spindle (33) situated at one of the extremities (32) of a small rod (29) pivoting around a connecting spindle (23) situated at the other extremity (28) of the small rod (29) and in one piece with the nut (11), this spindle (33) being connected by a toggle joint (36) to the extremity (37) of a connecting rod (38) whose other extremity (39) is linked by a connecting spindle (40) to the cutting carriage (1).

2. Apparatus according to claim 1, characterized by the fact that the ball thread (8) has a starting period of no-load rotation so that the ball thread (8) can be started off suddenly.

3. Apparatus according to claim 1, characterized by the fact that the mechanical assembly (12) comprises a flank (42) provided with a guide path (41) in which the rollers (19) and (34) move, and the extremities (43, 44) of which are supported by bearings (45, 46) located at the extremities (10) and (47) of the ball thread (8).

4. Apparatus according to claim 3, characterized by the fact that the guide path (41) comprises a horizontal section (48) and a curvilinear section (49) shaped approximately like a quarter circle.

5. Apparatus according to claim 4, characterized by the fact that the curvilinear section (49) is situated at the side of the driven extremity (10) of the ball thread (8).

6. Apparatus according to claim 4, characterized by the fact that the curvilinear section (49) faces downwards.

7. Apparatus according to claim 1, characterized by the fact that the small rod (29) has, starting from the cutting carriage (1), a longitudinal axis forming an angle of about twenty five degrees with the vertical.

**Patentansprüche**

1. Einrichtung für die geradlinige Fortbewegung des Schneideschlittens (1) einer Spiralschlangen oder einer linearen Schneidemaschine, die kontinuierliche Rohrelemente formt, die für dis Herstellung von Rohren oder Verpackungen geeignet sind. Dieser Schlitten (1) ist an seinen Extremitäten, vorne und hinten (2), mit paaren von Führungsschlitten versehen (3), die entlang der beiden Führungschienen (4) parallel zur Längsachse der Spiralschlangenschneidemaschine oder der linearen Formschneidemaschine gleiten und deren Vortrieb mit jenem der Rohrelemente synchronisiert und mit einer Schraubenmutter (11) gesichert ist, die sich auf einem Kugelgewindetrieb (8) bewegt, der durch irgendein Mittel in Rotation versetzt wird. Diese Schraubenmutter ist gekennzeichnet durch eine Ausstattung, die dem Schneideschlitten (1) einen sinusförmigen Anlauf verleiht, dem eine Fortbewegung mit konstanter Geschwindigkeit folgt, die mit der Vortriebs-Geschwindigkeit der Rohrelemente synchronisiert ist, zumindest einen mechanischen Aufbau (12), der zwischen Schneideschlitten (1) und Schraubenmutter (11) des Kugelgewindetriebs (8) geschaltet ist und zwei Lagerwalzen (19) und (34) umfasst, von denen die eine (19) auf einer Achse (16) montiert ist, die mit der Schraubenmutter (11) zusammenhängt und die andere auf einer Achse befestigt ist (33), die sich an einem Ende (32) eines Schwingarms (29) befindet, der sich um eine Drehachse (23) bewegt, die sich am anderen Ende (28) des Schwingarms (29) befindet und mit der Schraubenmutter (11) verbunden ist. Die angeführte Achse (33) ist an dem Ende (37) eines Pleuels (38) mit einem Kniestück gekoppelt (36), während das andere Ende (39) mittels Schwingarm (40) an den Schneideschlitten (1) gekoppelt ist.

2. Die Vorrichtung gemäss Anspruch 1 zeichnet sich dadurch aus, dass der Kugelgewindetrieb (8) einen Beginn mit Leerlauf umfasst, der den plötzlichen Einsatz des Kugelgewindetriebs (8) gestattet.

3. Die Vorrichtung gemäss Anspruch 1 ist dadurch gekennzeichnet, das der mechanische Aufbau (12) eine Seitenfläche (42) umfasst, auf der ein Führungsweg (41) vorgesehen ist, innerhalb dessen sich die Lagerwalzen (19) und (34) bewegen und dessen Endpunkte (43, 44) durch Lager (45, 46) unterstützt werden, die auf den Endpunkten (10) und (47) des Kugelgewindetriebs (8) aufliegen.

4. Die Vorrichtung gemäss Anspruch 3 ist dadurch gekennzeichnet, dass der Führungsweg (41) ein horizontales Teilstück (48) und ein kurvenförmiges Teilstück (49) umfasst, das ennähernd die Form eines Viertelkreises besitzt.

5. Die Vorrichtung gemäss Anspruch 4 ist dadurch gekennzeichnet, dass sich das kurvenförmige Teilstück (49) an der Seite des mitgeführten Endpunktes (10) des Kugelgewindetriebs (8) befindet.

6. Die Vorrichtung gemäss Anspruch 4 ist dadurch gekennzeichnet, dass das kurvenförmige Teilstück nach unten gerichtet ist.

7. Die Vorrichtung nach Anspruch 1 ist dadurch gekennzeichnet, dass der Schwingarm (29) am Anfang des Schneideschlittens (1) eine Längsachse besitzt, die mit der Vertikale einen Winkel von fünfundzwanzig Grad bildet.

# FIG. 1

EP 0 210 938 B1

FIG. 2

FIG. 3